# EUROPEAN PATENT SPECIFICATION

(11) **EP 4 320 476 B1**
(45) Date of publication and mention of the grant of the patent: **01.10.2025**
(21) Application number: 22727586.4
(22) Date of filing: 10.05.2022
(51) Int. Cl.: G02B 27/00, G02B 27/32, G02B 27/01

(54) **FIT DETECTION SYSTEM FOR HEAD-MOUNTABLE DEVICES**
PASSFORMDETEKTIONSSYSTEM FÜR KOPFMONTIERBARE VORRICHTUNGEN
SYSTÈME DE DÉTECTION D'AJUSTEMENT POUR DISPOSITIFS POUVANT ÊTRE MONTÉS SUR LA TÊTE

(30) Priority: 10.05.2021 US 202163186725 P
(43) Date of publication of application: 14.02.2024
(73) Proprietor: Apple Inc., Cupertino, CA 95014 (US)
(72) Inventor: WANG, Paul, X., Cupertino, CA 95014 (US); LEINWEBER, Scott, M., Cupertino, CA 95014 (US); KOLLGAARD, Adam, Y., Cupertino, CA 95014 (US); FRANKLIN, Jeremy, C., Cupertino, CA 95014 (US)
(74) Representative: Barton, Russell Glen
(86) International application number: PCT/US2022/028628
(87) International publication number: WO 2022/240902

(56) References cited:
- WO-A2-2006/131922
- US-A1- 2013 249 778
- US-A1- 2013 318 776
- US-A1- 2015 055 085
- US-A1- 2015 261 291
- US-A1- 2015 359 423
- US-A1- 2020 026 079

## Description

### CROSS-REFERENCE TO RELATED APPLICATION

This application claims the benefit of U.S. Provisional Application No. 63/186,725, entitled "FIT DETECTION SYSTEM FOR HEAD-MOUNTABLE DEVICES," filed May 10, 2021.

### TECHNICAL FIELD

The present description relates generally to head-mountable devices, and, more particularly, to fit detection systems for head-mountable devices.

### BACKGROUND

A head-mountable device can be worn by a user to display visual information within the field of view of the user. The head-mountable device can be used as a virtual reality (VR) system, an augmented reality (AR) system, and/or a mixed reality (MR) system. A user may observe outputs provided by the head-mountable device, such as visual information provided on a display. The display can optionally allow a user to observe an environment outside of the head-mountable device. Other outputs provided by the head-mountable device can include speaker output and/or haptic feedback. A user may further interact with the head-mountable device by providing inputs for processing by one or more components of the head-mountable device. For example, the user can provide tactile inputs, voice commands, and other inputs while the device is mounted to the user's head.

US 2013/318776 A1 discloses customizing frames for augmented reality devices includes receiving a fit profile of a user and selecting a stock frame from a set of different frame sizes. The selected stock frame may be a size that is a closer match to the fit profile than other frame sizes in the set, and the stock frame may be adjusted to create a modified frame that provides a closer match to the fit profile than the stock frame. A see-through display may be coupled to the modified frame.

US 2015/261291 A1 discloses methods and systems for head mounted display (HMD) implementations. In one example implementation, an HMD includes a circuit for communicating with a computing system that processes multimedia content for display in the HMD. Further included is a front unit of the HMD that has a screen for displaying multimedia content, and the front unit has a set of LEDs. The HMD includes an accelerometer and gyroscope disposed in the front unit of the HMD. A rear section of the HMD is provided having a set of LEDs. A headband connecting the front unit to the rear section is included, such that adjustment of the headband changes a separation distance between at least one of the set of LEDs of the front unit and at least one of the set of LEDs of the rear section. Wherein calibration of the separation distance is performed from time to time to produce and estimated separation distance for tracking of the HMD during use.

WO 2006/131922 A2 discloses a method and apparatus for mapping the shape and dimensions of a three-dimensional body, by applying to the three-dimensional body a stretchable covering configured and dimensioned such that in its stretched condition it tightly engages and conforms to the shape and dimensions of the three-dimensional body to be mapped. The stretchable covering carries a plurality of reference devices, such as bands and/or markers which are at known or determinable reference locations in an initial condition of the covering, and which change their locations in the stretched condition of the stretchable covering according to the shape and dimensions of the three-dimensional body covered thereby. The locations of the markers on the stretchable covering are determined after the stretchable covering has been applied to the three-dimensional body, and are utilized to produce a map of the shape and dimensions of the three-dimensional body.

US 2013/249778 A1 discloses a head-mounted display including a casing and a reference portion provided on the casing for observing an eye of a wearer of the head-mounted display such that a relative position between the casing and the eye of the wearer is adjustable.

### BRIEF DESCRIPTION OF THE DRAWINGS

The present invention is set forth in the appended claims. However, for purpose of explanation, several embodiments of the subject technology are set forth in the following figures.
FIG. 1 illustrates a top view of a head-mountable device, according to some embodiments of the present disclosure.
FIG. 2 illustrates a side view of an electronic device in use to measure features of a user, according to some embodiments of the present disclosure.
FIG. 3 illustrates a side view of an electronic device in use to measure features of a user and/or a fitting device, according to some embodiments of the present disclosure.
FIG. 4 illustrates a view of an assembly for a fitting device, according to some embodiments of the present disclosure.
FIG. 5 illustrates a perspective view of a fitting device, according to some embodiments of the present disclosure.
FIG. 6 illustrates a side view of a band for a fitting device, according to some embodiments of the present disclosure.
FIG. 7 illustrates a side view of a band in a first configuration, according to some embodiments of the present disclosure.
FIG. 8 illustrates a side view of the band of FIG. 7 in a second configuration, according to some embodiments of the present disclosure.
FIG. 9 illustrates a perspective view of a frame of a fitting device, according to some embodiments of the present disclosure.
FIG. 10 illustrates a flow chart for a process having operations for detecting a fit for a head-mountable device, according to some embodiments of the present disclosure.
FIG. 11 illustrates a block diagram of an electronic device that may be used in a fit detection system in accordance with one or more implementations.
FIG. 12 illustrates a block diagram of a head-mountable device, in accordance with some embodiments of the present disclosure.

### DETAILED DESCRIPTION

The detailed description set forth below is intended as a description of various configurations of the subject technology and is not intended to represent the only configurations in which the subject technology may be practiced. The appended drawings are incorporated herein and constitute a part of the detailed description. The detailed description includes specific details for the purpose of providing a thorough understanding of the subject technology. However, it will be clear and apparent to those skilled in the art that the subject technology is not limited to the specific details set forth herein and may be practiced without these specific details. In some instances, well-known structures and components are shown in block diagram form in order to avoid obscuring the concepts of the subject technology.

Head-mountable devices, such as head-mountable displays, headsets, visors, smartglasses, head-up display, etc., can perform a range of functions that are managed by the components **(e.g.,** sensors, circuitry, and other hardware) included with the wearable device.

Many of the functions performed by a head-mountable device are optimally experienced when the components are in their most preferred position and orientation with respect to a user wearing the head-mountable device. For example, the head-mountable device can include a display that visually outputs display-based information toward the eyes of the user. The position and orientation of the displays relative to the eyes depends, at least in part, on how the head-mountable device is positioned on the face of the user. Due to variations in facial features across different users, a given head-mountable device may require adjustment to accommodate different users. For example, different users can have different facial features **(e.g.,** face plane slope, forehead size, eye location). Accordingly, different users may perceive the displayed information differently unless a preferred arrangement is provided.

It can be costly to require each user to acquire an entire head-mountable device that is custom-made and specifically tailored to their facial features. In particular, such an approach would require customization of each head-mountable device and/or the ability to choose from a wide variety of head-mountable devices. It can be beneficial to provide modular features that can be individually chosen to achieve the desired fit. However, it is important to properly detect the feature of the user's head so the optimal components can be selected to provide a desired fit.

Systems of the present disclosure provide a fitting device that can be worn by a user to facilitate detection of the user's features and guide the user to selecting components **(e.g.,** modules) of a head-mountable device that will provide the best fit when assembled together. By providing head-mountable devices with modular features, certain modules can provide a custom fit without requiring the entire head-mountable device to be custom fitted to each user. An electronic device can be operated to guide a user to select the optimal components, such as a face seal and/or head engager for use with an HMD module.

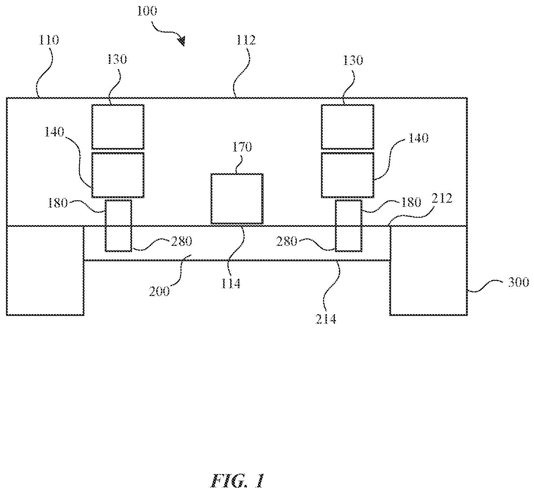

These and other embodiments are discussed below with reference to FIGS. 1-12. However, those skilled in the art will readily appreciate that the detailed description given herein with respect to these Figures is for explanatory purposes only and should not be construed as limiting.

According to some embodiments, for example as shown in FIG. 1, a head-mountable device 100 includes an HMD module 110 and a face seal 200. The HMD module 110 includes a frame 108 that is worn on a head of a user. The frame 108 can be positioned in front of the eyes of a user to provide information within a field of view of the user. The HMD module 110 and/or the face seal 200 can provide nose pads and/or other portions to rest on a user's nose, forehead, cheeks, and/or other facial features as described further herein.

The frame 108 can be supported on a user's head with the head engager 300. The head engager 300 can wrap around or extend along opposing sides of a user's head. The head engager 300 can optionally include earpieces for wrapping around, engaging with, or resting on a user's ears. It will be appreciated that other configurations can be applied for securing the head-mountable device 100 to a user's head. For example, one or more bands, straps, belts, caps, hats, or other components can be used in addition to or in place of the illustrated components of the head-mountable device 100. By further example, the head engager 300 can include multiple components to engage a user's head. The head engager 300 can extend from the HMD module 110 and/or the face seal 200.

The frame 108 can provide structure around a peripheral region thereof to support any internal components of the frame 108 in their assembled position. For example, the frame 108 can enclose and support various internal components (including for example integrated circuit chips, processors, memory devices and other circuitry) to provide computing and functional operations for the head-mountable device 100, as discussed further herein. While several components are shown within the frame 108, it will be understood that some or all of these components can be located anywhere within or on the head-mountable device 100. For example, one or more of these components can be positioned within the head engager 300, the face seal 200, and/or the HMD module 110 of the head-mountable device 100.

The frame 108 can include and/or support one or more cameras 130. The cameras 130 can be positioned on or near an outer side 112 of the frame 108 to capture images of views external to the head-mountable device 100. As used herein, an outer side of a portion of a head-mountable device is a side that faces away from the user and/or towards an external environment. The captured images can be used for display to the user or stored for any other purpose. Each of the cameras 130 can be movable along the outer side 112. For example, a track or other guide can be provided for facilitating movement of the camera 130 therein.

The head-mountable device 100 can include displays 140 that provide visual output for viewing by a user wearing the head-mountable device 100. One or more displays 140 can be positioned on or near an inner side 114 of the frame 108. As used herein, an inner side 114 of a portion of a head-mountable device is a side that faces toward the user and/or away from the external environment.

A display 140 can transmit light from a physical environment (e.g., as captured by a camera) for viewing by the user. Such a display 140 can include optical properties, such as lenses for vision correction based on incoming light from the physical environment. Additionally or alternatively, a display 140 can provide information as a display within a field of view of the user. Such information can be provided to the exclusion of a view of a physical environment or in addition to (e.g., overlaid with) a physical environment.

A physical environment relates to a physical world that people can sense and/or interact with without necessarily requiring the aid of an electronic device. A computer-generated reality environment relates to a wholly or partially simulated environment that people sense and/or interact with the assistance of an electronic device. Examples of computer-generated reality include mixed reality and virtual reality. Examples of mixed realities can include augmented reality and augmented virtuality. Some examples of electronic devices that enable a person to sense and/or interact with various computer-generated reality environments include head-mountable systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers. A head-mountable device can have an integrated opaque display, have a transparent or translucent display, or be configured to accept an external opaque display (e.g., smartphone).

Each display 140 can be adjusted to align with a corresponding eye of the user. For example, each display 140 can be moved along one or more axes until a center of each display 140 is aligned with a center of the corresponding eye. Accordingly, the distance between the displays 140 can be set based on an interpupillary distance of the user. IPD is defined as the distance between the centers of the pupils of a user's eyes.

The pair of displays 140 can be mounted to the frame 108 and separated by a distance. The distance between the pair of displays 140 can be designed to correspond to the IPD of a user. The distance can be adjustable to account for different IPDs of different users that may wear the head-mountable device 100. For example, either or both of the displays 140 may be movably mounted to the frame 108 to permit the displays 140 to move or translate laterally to make the distance larger or smaller. Any type of manual or automatic mechanism may be used to permit the distance between the displays 140 to be an adjustable distance. For example, the displays 140 can be mounted to the frame 108 via slidable tracks or guides that permit manual or electronically actuated movement of one or more of the displays 140 to adjust the distance there between.

Additionally or alternatively, the displays 140 can be moved to a target location based on a desired visual effect that corresponds to user's perception of the display 140 when it is positioned at the target location. The target location can be determined based on a focal length of the user and/or optical components of the system. For example, the user's eye and/or optical components of the system can determine how the visual output of the display 140 will be perceived by the user. The distance between the display 140 and the user's eye and/or the distance between the display 140 and one or more optical components can be altered to place the display 140 at, within, or outside of a corresponding focal distance. Such adjustments can be useful to accommodate a particular user's eye, corrective lenses, and/or a desired optical effect.

The head-mountable device 100 can include one or more user sensors for tracking features of the user wearing the head-mountable device 100. Such a sensor can be located at, included with, and/or associated with the HMD module 110, the face seal 200, and/or the head engager 300.

By further example, a user sensor 170 can perform facial feature detection, facial movement detection, facial recognition, eye tracking, user mood detection, user emotion detection, voice detection, etc. Such eye tracking may be used to determine a location of information to be displayed on the displays 140 and/or a portion (e.g., object) of a view to be analyzed by the head-mountable device 100. By further example, the user sensor 170 can be a bio-sensor for tracking biometric characteristics, such as health and activity metrics. The user sensor 170 can include a bio-sensor that is configured to measure biometrics such as electrocardiographic (ECG) characteristics, galvanic skin resistance, and other electrical properties of the user's body. Additionally or alternatively, a bio-sensor can be configured to measure body temperature, exposure to UV radiation, and other health-related information.

As further shown in FIG. 1, the face seal 200 can define an interior space through which light can pass, thereby providing to the user wearing the head-mountable device 100 a view of a displays 140 of the HMD module 110. Such a view can be enhanced by preventing the ingress of light from the external environment and into the face seal 200.

The components of the head-mountable device 100 can be provided with modular configurations that facilitate engagement (e.g., assembly) and release. As used herein, "modular" or "module" can refer to a characteristic that allows an item, such as a face seal, to be connected, installed, removed, swapped, and/or exchanged by a user in conjunction with another item, such as an HMD module of a head-mountable device. Connection of a face seal, a head engager, and/or an HMD module can be performed and reversed, followed by disconnection and connection of another module replacing the prior module. As such, multiple modules can be exchangeable with each other with respect to another module.

Engagers can facilitate coupling of the HMD module 110 to the face seal 200 in a relative position and orientation that aligns the displays 140 of the HMD module 110 in a preferred position and orientation for viewing by the user. The HMD module 110 and the face seal 200 can be coupled to prevent ingress of light from an external environment. For example, HMD module engagers 180 can releasably engage face seal engagers 280. One or more of various mechanisms can be provided to secure the modules to each other. For example, mechanisms such as locks, latches, snaps, screws, clasps, threads, magnets, pins, an interference (e.g., friction) fit, knurl presses, bayoneting, and/or combinations thereof can be included to couple and/or secure the HMD module 110 and the face seal 200 together. The modules can remain secured to each other until an optional release mechanism is actuated. The release mechanism can be provided on an outer surface of the head-mountable device 100 for access by a user.

While the face seal 200 is shown schematically with a particular size and shape, it will be understood that the size and shape of the face seal 200, particularly at the inner side 214 of the face seal 200, can have a size and shape that accommodates the face of a user wearing the head-mountable device 100. For example, the inner side 214 can provide a shape that generally matches the contours of the user's face around the eyes of the user, as described further herein. The inner side 214 can be provided with one or more features that allow the face seal 200 to conform to the face of the user to enhance comfort and block light from entering the face seal 200 at the points of contact with the face. For example, the inner side 214 can provide a flexible, soft, elastic, and/or compliant structure.

While the head-mountable device 100 is worn by a user, with the inner side 214 of the face seal 200 against the face of the user and/or with the head engager 300 against the head of the user, the face seal 200 can remain in a fixed location and orientation with respect to the face and head of the user. Furthermore, in such a configuration the HMD module 110 can also be maintained in a fixed location and orientation with respect to the face and head of the user. Given the variety of head and face shapes that different users may have, it can be desirable to provide a face seal 200 with customization and exchangeability so that the HMD module 110 is in a desired position and orientation with respect to the face and head of the user during use.

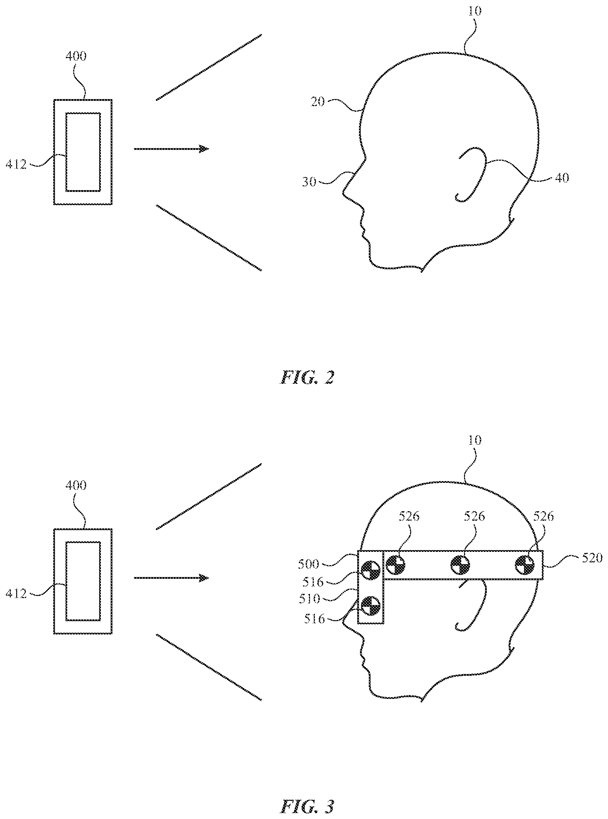

Referring now to FIGS. 2 and 3, an electronic device can be operated to detect and/or measure one or more regions of a face of a user and/or a fitting device when worn by the user. Such detections and measurements can be used to determine which of a variety of component (e.g., face seals, head engagers, etc.) is most appropriate to achieve a desired fit with respect to the face of the user.

As shown in FIG. 2, an electronic device 400 \provides a sensor 412 that is operable to measure distances tc multiple regions of the face of a user 10. Such regions can include the regions that would be engaged by a face seal when the head-mountable device is worn by the user. For example, the regions can include a forehead 20, a nose 30, and/or one or both cheeks 40. Such regions can further include the regions that would be engaged by a head engager when the head-mountable device is worn by the user. For example, the regions can include one or both ears 50.

The sensor 412 can include one or more types of sensors. For example, the sensor 412 can include one or more image sensors, depth sensors, thermal (e.g., infrared) sensors, and the like. By further example, a depth sensor can be configured to measure a distance (e.g., range) to an object (e.g., region of the user's face) via stereo triangulation, structured light, time-of-flight, interferometry, and the like. Additionally or alternatively, the face sensor and/or the device can capture and/or process an image based on one or more of hue space, brightness, color space, luminosity, and the like.

In FIG. 2 the sensor 412 is depicted as a component of an electronic device 400. The electronic device 400 can be or include a portable computing device, a tablet device, a laptop computer, a smartphone, a smart watch, or other appropriate devices that can include one or more sensors. The electronic device 400 can be maintained at a fixed location with respect to the user 10, or the electronic device 400 can be moved to map different regions of the head of the user 10.

The sensor 412 can measure a distance from the sensor 412 to each of multiple regions of the face of the user. For example, the sensor 412 can measure a forehead distance to a forehead 20 of the user 10. By further example, the sensor 412 can measure a nose distance to a nose 30 of the user 10. By further example, the sensor 412 can measure a cheek distance to a cheek 40 of the user 10. By further example, the sensor 412 can measure an ear distance to an ear 50 of the user 10. The sensor 412 can measure any other regions of the face, such as the hair, the eyes, and/or other portions that are not to be directly engaged by the face seal and/or the head engager. It will be understood that other regions of the face can be detected and/or measured. Additionally or alternatively, one or multiple distance measurements can be made to each of various regions, such as with respect to multiple sections of the forehead 20, nose 30, cheeks 40, and/or ears 50. Additionally or alternatively, the measurements can be made from different locations (e.g., positions and/or orientations with respect to the head of the user 10).

Optionally, as shown in FIG. 2, the measurements made by the electronic device 400 can be performed while the user is not wearing a device on the head. It will be understood that such measurements may provide different data than when a device is worn on the head. For example, some features of the user (e.g., hair, etc.) can be moved or adjusted when a device is worn on the head. As such, some measurements can be taken while a device is not worn, while other measurements can be taken while a device is worn.

As shown in FIG. 3, the electronic device 400 can operate one or more sensors 412 to detect a fitting device 500. The fitting device 500 can include one or more features that are identifiable and/or detectable by the electronic device 400. For example, the fitting device 500 can engage a face of the user with a frame 510. By further example, the fitting device 500 can include a band 520 for securing the frame 510 to the face of the user. For example, the band 520 can wrap around and/or extend along sides and/or the back of the user's head. The frame 510 and/or the band 520 can have a shape and/or size in a nominal configuration that is known to the electronic device 400, such that any deformations and/or changes to the fitting device 500 can be detected by the electronic device 400.

The fitting device 500 can include one or more fiducial markers that are detectable by the electronic device 400 to provide visual references of the position and/or orientation of the components of the fitting device 500. For example, the frame 510 can include one or more frame fiducial markers 516, and the band 520 can include one or more band fiducial markers 526.

A detection can be facilitated by capturing a view of the fiducial markers 516 and 526. The fiducial markers 516 and 526 can be optically or otherwise distinguishable from other structures within the field of view of the sensor 412. The fiducial markers 516 and 526 can be or have known visual features. For example, the fiducial markers 516 and 526 may be or include a particular color scheme, a particular shape, a particular size, a particular marking, such as quick response (QR) codes or other bar codes or markings, a visual feature or marking that is exposed through image processing, and/or generally any combination thereof. It will be understood that the shape of the frame 510 and/or the band 520 can form a fiducial marker.

The image of the fiducial markers 516 and 526 as captured by the sensor 412 can be compared to the known visual feature represented by the fiducial markers 516 and 526. Additionally or alternatively, the fiducial markers 516 and 526 can have known relative positions and/or orientations with respect to each other in a nominal state, such that any changes to the relative positions and/or orientations can be detected by the electronic device 400.

The sensor(s) used for different operations described herein can be the same or different. For example, the sensor(s) used for mapping features of the user's head can include depth sensors, thermal (e.g., infrared) sensors, and the sensor(s) used for mapping fiducial markers can include one or more image sensors. It will be understood that other sensors can be employed and/or that multiple sensors can be used in any one operation.

The electronic device 400 operate one or more sensors 412 to detect regions of the head of the user 10 while the user 10 wears the fitting device 500. Such regions can include the regions that are not covered by the fitting device 500. Where both the fitting device 500 and the features of the user 10 are detected (in the same or different operations), the relative position of the fitting device 500 on the head of the user 10 can be determined. For example, by comparing the detected positions and/or orientations of the forehead 20, the nose 30, the cheeks 40, and/or the ears 50 with respect to the detected positions and/or orientations of the fiducial markers 516 and 526, the electronic device 400 can determine how the user is wearing the fitting device 500.

The electronic device 400 can then determine how a head-mountable device can be worn in a recommended configuration. Factors in such a determination can include a desired position and/or orientation with respect to the user's eyes, a desired distribution of forces on the face of the user (e.g., to reduce fatigue), and the like. The electronic device 400 can determine recommended components (e.g., face seal and/or head engager) that, when used as part of or with the head-mountable device, would achieve the desired outcomes.

Based at least in part on the distance measurements and/or the views of the user and/or the fiducial markers, a face seal can be selected with various portions that match the contours of the face of the user. Different face seals can differ from each other at least with respect to the dimensions along different portions thereof. For example, different face seals can have different thicknesses along different portions to accommodate the face of various different users. The determination of a recommended face seal can include a determination of what thicknesses at each portion of a face seal are needed to place an HMD module at a desired position and/or orientation relative to the head, face, and/or eyes of the user. Where such a desired position and/or orientation are known, the face seal can be selected as the one having the appropriate thickness to place the HMD module at the desired position and/or orientation when the face seal is engaged to the HMD module and the face of the user.

Additionally or alternatively, based at least in part on the distance measurements and/or the views of the user and/or the fiducial markers, a head engager can be selected to fit the user's head. Different head engagers can differ from each other at least with respect to the size and/or amount of tightness provided when worn by a user. For example, different head engagers can different lengths, elastic properties, and/or ranges of adjustability to accommodate different head sizes. The determination of a recommended head engager can include a determination of what amount of tension is preferred and can be provided to securely and comfortably hold an HMD module against a head of the user (e.g., when coupled to the face seal).

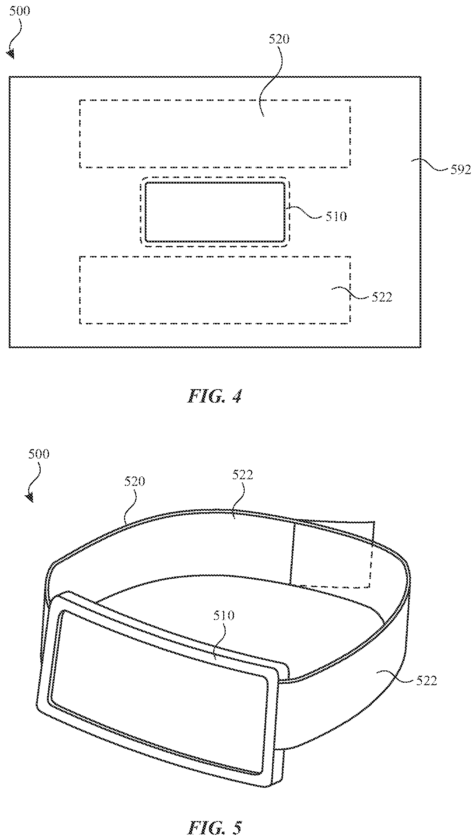

Referring now FIGS. 4 and 5, fitting devices disclose herein can provide one or more features that facilitate sizing of a user's head to determine recommended components for use with a head-mountable device.

As shown in FIG. 4, a fitting device can be provided as part of a kit 590. For example, the kit 590 can provided as a sheet 592 from which one or more components of the fitting device can be obtained. The components of the fitting device, such as the frame 510 and the band portions 522 can be separated from the rest of the sheet 592, for example by perforations that facilitate such separation.

As shown in FIG. 5, the components of the fitting device 500 can be assembled. For example, each of the band portions 522 can be attached to opposing ends of the frame 510. At opposite ends of each of the band portions 522 the band segments can be attached to each other or alternatively manually held in place by the user as the user tried different amounts of tension in the band 520.

As such, the assembly (e.g., sheet 592) can be provided in a compact, low-profile form for later assembly by the user. In such examples, the fitting device can be transported to a user for fitting prior to ordering and/or obtaining a head-mountable device. Accordingly, the fitting, detections, and determinations may occur in a manner that allows the user to be informed regarding the recommended components, so that such recommended components can be obtained along with the other portions of the head-mountable device.

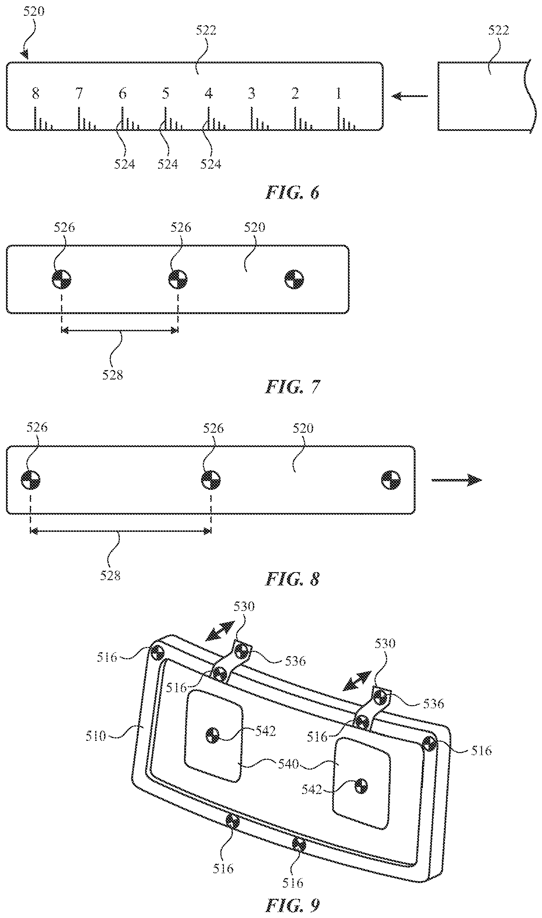

Referring now FIGS. 6-8, a band of a fitting device can be provided with features that facilitate sizing to determine a recommended head engager of a head-mountable device.

As shown in FIG. 6, the band 520 can include separate band portions 522 that are moveable relative to each other to adjust an amount of tension applied as the user wears the fitting device. For example, one band portion 522 can overlap another band portion 522 in various relative positions until the user is comfortable with the tightness. One or both of the band portions 522 can provide measurement markers 524 to indicate the extent of overlap between the separate band portions 522. For example, the measurement markers 524 can include measurements of length, as with a ruler. The extent to which one band portion 522 overlaps the others can be indicated by the measurement markers 524 closest to the end of the overlapping band portion 522. The detection based on the measurement markers 524 can be made by an electronic device capturing a view of the measurement markers 524 and/or by a user, who can input the measurement into an electronic device.

As shown in FIGS. 7 and 8, the band 520 includes band fiducial markers 526 that are separated from each other by a distance 528. The band fiducial markers 526 are moveable relative to each other based on an amount of tension applied to the band 520. For example, as the band 520 stretches to accommodate a size of the user's head, the distance 528 between adjacent band fiducial markers 526 can increase. Accordingly, by detecting the distance between adjacent band fiducial markers 526, the amount of tension and/or overall size of the user's head can be determined. Such a detection can be made by an electronic device capturing a view of the band fiducial markers 526 and/or by a user, who can input the measurement into an electronic device.

Referring now FIG. 9, a frame of a fitting device can be provided with features that facilitate sizing to determine a recommended face seal of the head-mountable device.

As shown in FIG. 9, the frame 510 can include multiple frame fiducial markers 516 distributed along an outer surface of the frame 510. The multiple frame fiducial markers 560 can have any distribution that is known to the electronic device used to detect the frame fiducial markers 516. As such, any deformation and/or movement of the frame fiducial markers 516 from an expected position and orientation can be interpreted as changes made to conform the frame 510 to the contours of the user's face. Accordingly, the position and orientation of the frame fiducial markers 516 can represent the contours of the user's face and can thus be used to indirectly map the features of the user's face.

As further shown in FIG. 9, one or more lenses 540 can be coupled to the frame 510 in a fixed location and/or orientation. It will be understood that the lenses 540 need not provide division correction or other optical properties. Instead, the lenses 540 can be used to determine the position of the user's eyes with respect to other parts of the user's face. For example, the user can be instructed (e.g., by the electronic device or an instruction manual) to place lens fiducial markers 542 of the lenses 540 within the user's field of view while wearing the frame 510. More particularly, the user can be instructed to place the lens fiducial markers 542 at the center of the user's field of view. With the lens fiducial markers 542 at a known location with respect to the user's eyes, electronic device can detect the lens fiducial markers 542 to indirectly map of the eyes of the user. Such information can be useful to recommend components that will accommodate the location of the user's eyes (e.g., by placing the displays at a preferred location with respect to the user's eyes).

As further shown in FIG. 9, and in accordance with the claimed invention, one or more deformation arms 530 are provided as extending away from the frame 510. The deformation arms 530 are used to detect how the frame 510 interacts with the face of the user. For example, the frame 510 can include a compressible element (e.g., foam, elastic, and the like) to comfortably conform to the face of the user. The amount of force and pressure applied to the face of the user while wearing the fitting device is a basis for determining recommended components for a head-mountable device that will apply forces within a range that will provide securement and comfort.

In use, the deformation arms 530 extend from the frame 510 and directly abut the head (e.g., forehead, check, nose, etc.) of the user. A deformation arm fiducial marker 536 can indicate the location of abutment, and the deformation arm fiducial marker 536 can move as the corresponding deformation arm 530 compresses, deflect, or otherwise deforms when the fitting device is worn tightly on the head of the user. A distance between a deformation arm fiducial marker 536 and a frame fiducial marker 516 can correspondingly change. Accordingly, by detecting the distance between the deformation arm fiducial marker 536 and the frame fiducial marker 516, the amount of compression can be determined, and the amount of force and/or pressure on the face of the user can be calculated. Such a detection can be made by an electronic device capturing a view of the deformation arm fiducial marker 536 and the frame fiducial marker 516 and/or by a user, who can input the measurement into an electronic device.

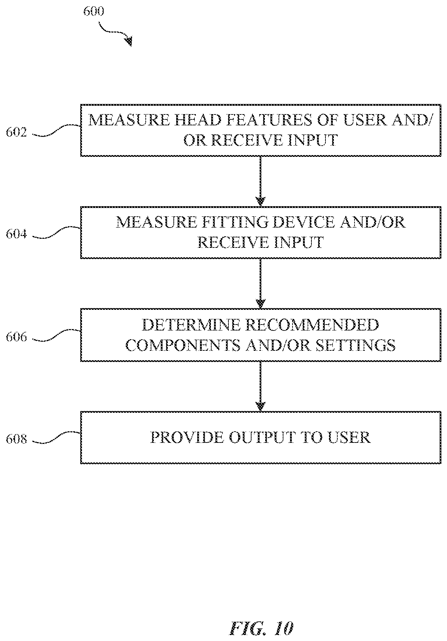

FIG. 10 illustrates a flow diagram of an example process 600 for determining a recommended face seal and/or head engager with corresponding output to a user. For explanatory purposes, the process 600 is primarily described herein with reference to the electronic device 400 of FIGS. 2 and 3. However, the process 600 is not limited to the electronic device 400 of FIGS. 2 and 3, and one or more blocks (or operations) of the process 600 may be performed by different components of the electronic device and/or one or more other devices. Further for explanatory purposes, the blocks of the process 600 are described herein as occurring in serial, or linearly. However, multiple blocks of the process 600 may occur in parallel. In addition, the blocks of the process 600 need not be performed in the order shown and/or one or more blocks of the process 600 need not be performed and/or can be replaced by other operations.

The process 600 can begin when the electronic device measures head features of a user (602). Such a measurement can be made by one or more sensors of the electronic device. Optionally, the measurement can be performed in response to a detection of the user, a user input, and/or an operational state of the electronic device (e.g., on/off state, application launch, and the like). A sensor of the electronic device (i.e., a depth sensor) measures one or more distances to one or more regions of the head. Such regions can include a forehead, nose, cheeks, ears, and/or eyes of the user. Optionally, the measurements can be made while no fitting device is worn. It will be understood that the electronic device can detect the absence of a fitting device and determine whether and how to measure the head features.

A sensor of the electronic device (i.e., an image sensor) captures a view containing one or more head features of the user and/or a fitting device while being worn by the user (604). Such regions can include a forehead, nose, cheeks, ears, and/or eyes of the user. The view can be captured while the fitting device is worn. It will be understood that the electronic device can detect the presence of a fitting device and determine whether and how to capture the view.

Based on the measured distances and/or captured views, the electronic device can determine a recommended face seal and/or head engager for use with the HMD module (606). For example, a variety of available face seals with known dimensions (e.g., thicknesses, widths, and/or heights) can be compared to the optimal thicknesses, widths, and/or heights that, based on the distance measurements, would place an HMD module at a desired position and/or orientation. The electronic device or other device can communicate with another device to retrieve information regarding the available face seals, including the dimensions thereof. By further example, a variety of available head engagers with known dimensions (e.g., sizes, tightness ranges, etc.) can be compared to the desired tightness and/or fit for the user's head. The electronic device or other device can communicate with another device to retrieve information regarding the available head engagers, including the dimensions thereof.

The electronic device or other device can provide an output to a user based on the recommended face seal and/or head engager (608). For example, the electronic device can provide a visual output on the displays, a sound, or other output that communicates to the user an indication of the recommended face seal and/or head engager. The user can then take appropriate actions to acquire, install, and/or employ the recommended face seal and/or head engager. In some examples, the electronic device can communicate with another system to order a recommended face seal and/or head engager. The output can further include instructions for installation of the face seal and/or head engager with the HMD module.

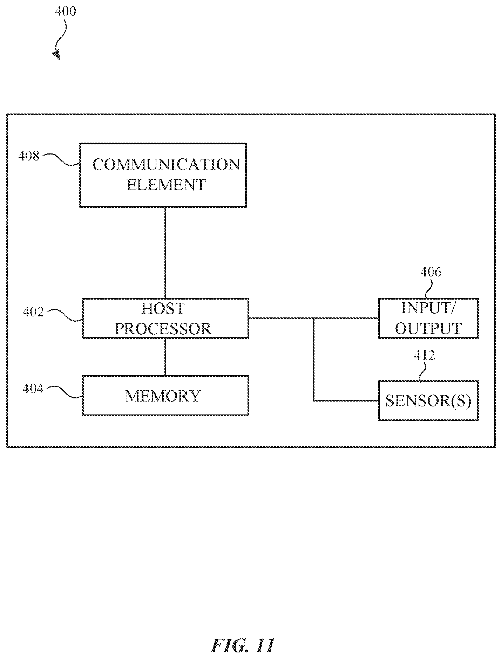

FIG. 11 illustrates an example electronic device 400 that may be used to detect and/or measure a user and/or a fitting device in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

The electronic device 400 may include, among other components, a host processor 402, a memory 404, one or more input/output devices 406, a communication element 408, and/or one or more sensors 412.

The host processor 402, which may also be referred to as an application processor or a processor, may include suitable logic, circuitry, and/or code that enable processing data and/or controlling operations of the electronic device 400. In this regard, the host processor 402 may be enabled to provide control signals to various other components of the electronic device 400. The host processor 402 may also control transfers of data between various portions of the electronic device 400. Additionally, the host processor 402 may enable implementation of an operating system or otherwise execute code to manage operations of the electronic device 400. The memory 404 may include suitable logic, circuitry, and/or code that enable storage of various types of information such as received data, generated data, code, and/or configuration information. The memory 404 may include, for example, random access memory (RAM), read-only memory (ROM), flash, and/or magnetic storage.

The communication element 408 may include suitable logic, circuitry, and/or code that enables wired or wireless communication. The communication element 408 of any given device can providing a communication link with the communication element of any other device. Such communication can be direct or indirect (e.g., through an intermediary). The communication element 408 may include, for example, one or more of a Bluetooth communication element, an NFC interface, a Zigbee communication element, a WLAN communication element, a USB communication element, or generally any communication element.

The one or more sensors 412 may include, for example, one or more image sensors, one or more depth sensors, one or more infrared sensors, one or more thermal (e.g., infrared) sensors, and/or generally any sensors that may be used to detect and/or measure lenses or a user.

In one or more implementations, one or more of the host processor 402, the memory 404, the one or more sensors 412, the communication element 408, and/or one or more portions thereof, may be implemented in software (e.g., subroutines and code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both.

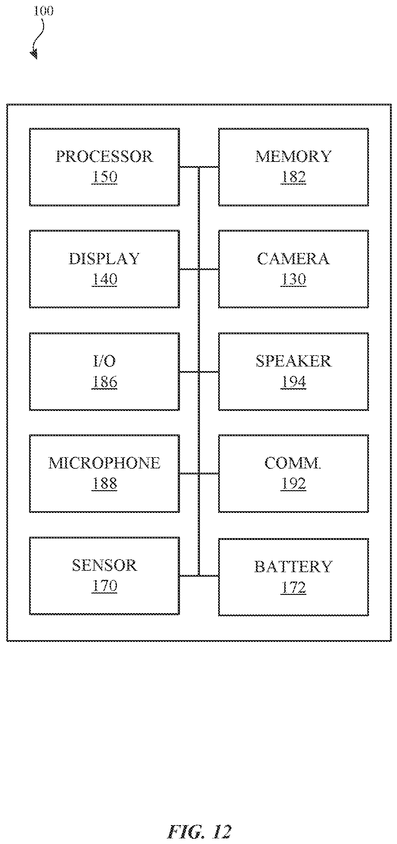

Referring now to FIG. 12, components of the electronic device can be operably connected to provide the performance described herein. FIG. 12 shows a simplified block diagram of an illustrative head-mountable device 100 in accordance with one embodiment of the invention. It will be appreciated that components described herein can be provided on one, some, or all of an HMD module, a face seal, and/or a head engager. It will be understood that additional components, different components, or fewer components than those illustrated may be utilized within the scope of the subject disclosure.

As shown in FIG. 12, the head-mountable device 100 can include a processor 150 (e.g., control circuity) with one or more processing units that include or are configured to access a memory 182 having instructions stored thereon. The instructions or computer programs may be configured to perform one or more of the operations or functions described with respect to the head-mountable device 100. The processor 150 can be implemented as any electronic device capable of processing, receiving, or transmitting data or instructions. For example, the processor 150 may include one or more of: a microprocessor, a central processing unit (CPU), an application-specific integrated circuit (ASIC), a digital signal processor (DSP), or combinations of such devices. As described herein, the term "processor" is meant to encompass a single processor or processing unit, multiple processors, multiple processing units, or other suitably configured computing element or elements.

The memory 182 can store electronic data that can be used by the head-mountable device 100. For example, the memory 182 can store electrical data or content such as, for example, audio and video files, documents and applications, device settings and user preferences, timing and control signals or data for the various modules, data structures or databases, and so on. The memory 182 can be configured as any type of memory. By way of example only, the memory 182 can be implemented as random access memory, read-only memory, Flash memory, removable memory, or other types of storage elements, or combinations of such devices.

The head-mountable device 100 can further include a display 140 for displaying visual information for a user. The display 140 can provide visual (e.g., image or video) output. The display 140 can be or include an opaque, transparent, and/or translucent display. The display 140 may have a transparent or translucent medium through which light representative of images is directed to a user's eyes. The display 140 may utilize digital light projection, OLEDs, LEDs, uLEDs, liquid crystal on silicon, laser scanning light source, or any combination of these technologies. The medium may be an optical waveguide, a hologram medium, an optical combiner, an optical reflector, or any combination thereof. In one embodiment, the transparent or translucent display may be configured to become opaque selectively. Projection-based systems may employ retinal projection technology that projects graphical images onto a person's retina. Projection systems also may be configured to project virtual objects into the physical environment, for example, as a hologram or on a physical surface. The head-mountable device 100 can include an optical subassembly configured to help optically adjust and correctly project the image-based content being displayed by the display 140 for close up viewing. The optical subassembly can include one or more lenses, mirrors, or other optical devices.

The head-mountable device 100 can further include a camera 130 for capturing a view of an external environment, as described herein. The view captured by the camera can be presented by the display 140 or otherwise analyzed to provide a basis for an output on the display 140.

The head-mountable device 100 can include an input/output component 186, which can include any suitable component for connecting head-mountable device 100 to other devices. Suitable components can include, for example, audio/video jacks, data connectors, or any additional or alternative input/output components. The input/output component 186 can include buttons, keys, or another feature that can act as a keyboard for operation by the user.

The head-mountable device 100 can include the microphone 188 as described herein. The microphone 188 can be operably connected to the processor 150 for detection of sound levels and communication of detections for further processing, as described further herein.

The head-mountable device 100 can include the speakers 194 as described herein. The speakers 194 can be operably connected to the processor 150 for control of speaker output, including sound levels, as described further herein.

The head-mountable device 100 can include communications circuitry 192 for communicating with one or more servers or other devices using any suitable communications protocol. For example, communications circuitry 192 can support Wi-Fi (e.g., a 802.11 protocol), Ethernet, Bluetooth, high frequency systems (e.g., 900 MHz, 2.4 GHz, and 5.6 GHz communication systems), infrared, TCP/IP (e.g., any of the protocols used in each of the TCP/IP layers), HTTP, BitTorrent, FTP, RTP, RTSP, SSH, any other communications protocol, or any combination thereof. Communications circuitry 192 can also include an antenna for transmitting and receiving electromagnetic signals.

The head-mountable device 100 can include a battery 172, which can charge and/or power components of the head-mountable device 100. The battery 172 can also charge and/or power components connected to the head-mountable device 100.

Accordingly, embodiments of the present disclosure provide systems that include a fitting device that can be worn by a user to facilitate detection of the user's features and guide the user to selecting components (e.g., modules) of a head-mountable device that will provide the best fit when assembled together. By providing head-mountable devices with modular features, certain modules can provide a custom fit without requiring the entire head-mountable device to be custom fitted to each user. An electronic device can be operated to guide a user to select the optimal components, such as a face seal and/or head engager for use with an HMD module.

A reference to an element in the singular is not intended to mean one and only one unless specifically so stated, but rather one or more. For example, "a" module may refer to one or more modules. An element proceeded by "a," "an," "the," or "said" does not, without further constraints, preclude the existence of additional same elements.

Headings and subheadings, if any, are used for convenience only and do not limit the invention. The word exemplary is used to mean serving as an example or illustration. To the extent that the term include, have, or the like is used, such term is intended to be inclusive in a manner similar to the term comprise as comprise is interpreted when employed as a transitional word in a claim. Relational terms such as first and second and the like may be used to distinguish one entity or action from another without necessarily requiring or implying any actual such relationship or order between such entities or actions.

Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

A phrase "at least one of" preceding a series of items, with the terms "and" or "or" to separate any of the items, modifies the list as a whole, rather than each member of the list. The phrase "at least one of" does not require selection of at least one item; rather, the phrase allows a meaning that includes at least one of any one of the items, and/or at least one of any combination of the items, and/or at least one of each of the items. By way of example, each of the phrases "at least one of A, B, and C" or "at least one of A, B, or C" refers to only A, only B, or only C; any combination of A, B, and C; and/or at least one of each of A, B, and C.

It is understood that the specific order or hierarchy of steps, operations, or processes disclosed is an illustration of exemplary approaches. Unless explicitly stated otherwise, it is understood that the specific order or hierarchy of steps, operations, or processes may be performed in different order. Some of the steps, operations, or processes may be performed simultaneously. These may be performed in serial, linearly, in parallel or in different order. It should be understood that the described instructions, operations, and systems can generally be integrated together in a single software/hardware product or packaged into multiple software/hardware products.

In one aspect, a term coupled or the like may refer to being directly coupled. In another aspect, a term coupled or the like may refer to being indirectly coupled.

Terms such as top, bottom, front, rear, side, horizontal, vertical, and the like refer to an arbitrary frame of reference, rather than to the ordinary gravitational frame of reference. Thus, such a term may extend upwardly, downwardly, diagonally, or horizontally in a gravitational frame of reference.

The disclosure is provided to enable any person skilled in the art to practice the various aspects described herein. In some instances, well-known structures and components are shown in block diagram form in order to avoid obscuring the concepts of the subject technology. The disclosure provides various examples of the subject technology, and the subject technology is not limited to these examples. Various modifications to these aspects will be readily apparent to those skilled in the art, and the principles described herein may be applied to other aspects.

The title, background, brief description of the drawings, abstract, and drawings are hereby incorporated into the disclosure and are provided as illustrative examples of the disclosure, not as restrictive descriptions. It is submitted with the understanding that they will not be used to limit the scope of the invention as defined by the claims.

## Claims

1. An electronic device (400) comprising:
a depth sensor (412) configured to measure distances from the depth sensor (412) to head features of a head;
an image sensor (412) configured to capture a view of a fitting device (500) on the head, the fitting device comprising a frame (510) and a deflection arm (530) extending from the frame, the deflection arm being biased to an extended configuration, and being configured to move to a deflected configuration when the deflection arm abuts a head and when the frame is worn on the face of the head; and
a processor configured to:
receive data corresponding to the distances and the view;
determine an amount of force and pressure applied by the frame to the face from view of the deflection arm;
based on the distances, the view and the amount of force and pressure, determine a recommended component for use with a head-mountable device that will apply forces within a range to provide securement and comfort; and
provide an output, the output comprising an indication of the recommended component.

2. The electronic device of claim 1, wherein:
the distances comprise:
a distance to a forehead;
a distance to a nose; and
a distance to a cheek; and
the recommended component comprises a face seal having a shape corresponding to the distance to the forehead, the distance to the nose, and the distance to the cheek.

3. The electronic device of any preceding claim, wherein:
the distances comprise a distance to an ear;
the recommended component comprises a head engager having a shape corresponding to the distance to the ear.

4. The electronic device of any preceding claim, further comprising an input device configured to provide a user interface for receiving an indication of a measurement of the head features or the fitting device.

5. The electronic device of any preceding claim, wherein the fitting device comprises fiducial markers, wherein the image sensor is configured to detect at least one of a color of the fiducial markers, a shape of the fiducial markers, or a distance between a pair of the fiducial markers.

6. The electronic device of any preceding claim, wherein the deflection arm has a deflection arm fiducial marker (536) and the frame has a frame fiducial marker (516), wherein the processor is configured to determine from view of the deflection arm fiducial marker and the frame fiducial marker a distance between the deflection arm fiducial marker and the frame fiducial marker, and wherein the determination of the amount of force and pressure is calculated from the the determined distance between the deflection arm fiducial marker and the frame fiducial marker.

7. A method (600) using a fitting device (500) comprising a frame (510) and a deflection arm (530) extending from the frame, the deflection arm being biased to an extended configuration, and being configured to move to a deflected configuration when the deflection arm abuts a head and when the frame is worn on the face of the head; the method being performed by an electronic device (400) and comprising: while the fitting device is not worn, measuring (602), with a depth sensor (412) of the electronic device, distances from the depth sensor to head features of the head;
while the fitting device is worn, capturing (604), with an image sensor (412) of the electronic device, a view of the fitting device including fiducial markers of the fitting device and the deflection arm;
determining an amount of force and pressure applied by the frame to the face from view of the deflection arm;
based on the distances, the view of the fiducial markers and the amount of force and pressure, determining (606) a recommended component of a head-mountable device that will apply forces within a range to provide securement and comfort; and
providing (608) an output comprising an indication of the recommended component.

8. The method of claim 7, wherein:
the distances comprise:
a distance to a forehead;
a distance to a nose; and
a distance to a cheek; and
the recommended component comprises a face seal having a shape corresponding to the distance to the forehead, the distance to the nose, and the distance to the cheek.

9. The method of claim 7, wherein:
the distances comprise a distance to an eye; and
the recommended component comprises a face seal having a shape corresponding to the distance to the eye.

10. The method of claim 7, wherein:
the distances comprise distance to an ear;
the recommended component comprises a head engager having a shape corresponding to the distance to the ear.

11. The method of claim 7, further comprising receiving, with an input device of the electronic device providing a user interface, an indication of a measurement of the head features or the fitting device.

12. The method of claim 7, wherein the method further comprises comparing the view of the fiducial markers to an expected color of the fiducial markers, an expected shape of the fiducial markers, or an expected distance between a pair of the fiducial markers.

13. A fitting device (500) comprising:
a frame (510) configured to be worn on a face of a head, the frame having multiple frame fiducial markers (516); and
a band (520) configured to secure the frame to the head, the band having multiple band fiducial markers (526) that are movable relative to each other based on an amount of tension applied to the band; and
a deflection arm (530) extending from the frame, being biased to an extended configuration, and being configured to move to a deflected configuration when the deflection arm abuts the head and when the frame is worn on the face..

14. The fitting device of claim 13, further comprising a deflection arm fiducial marker on the deflection arm.

15. The fitting device of claim 14, wherein the deflection arm fiducial marker is moveable relative to one of the frame fiducial markers based on a force applied to the face by the frame.

## Patentansprüche

1. Elektronische Vorrichtung (400), umfassend: einen Tiefensensor (412), der konfiguriert ist, um Abstände vom Tiefensensor (412) zu Kopfmerkmalen eines Kopfes zu messen; einen Bildsensor (412), der konfiguriert ist, um eine Ansicht einer Passvorrichtung (500) am Kopf zu erfassen, wobei die Passvorrichtung einen Rahmen (510) und einen Ablenkarm (530) umfasst, der sich vom Rahmen erstreckt, wobei der Ablenkarm in eine ausgefahrene Konfiguration vorgespannt ist und konfiguriert ist, um sich in eine abgelenkte Konfiguration zu bewegen, wenn der Ablenkarm an einem Kopf anliegt und wenn der Rahmen am Gesicht des Kopfes getragen wird; und einen Prozessor, der konfiguriert ist, um: Daten zu empfangen, die den Abständen und der Ansicht entsprechen; eine Menge an Kraft und Druck zu bestimmen, die vom Rahmen aus Sicht des Ablenkarms auf das Gesicht ausgeübt werden; basierend auf den Abständen, der Ansicht und der Kraft und der Menge an Druck eine empfohlene Komponente zur Verwendung mit einer am Kopf montierbaren Vorrichtung zu bestimmen, die Kräfte innerhalb eines Bereichs ausüben wird, um Sicherung und Komfort bereitzustellen; und eine Ausgabe bereitzustellen, wobei die Ausgabe eine Angabe der empfohlenen Komponente umfasst.

2. Elektronische Vorrichtung nach Anspruch 1, wobei: die Abstände umfassen: einen Abstand zu einer Stirn; einen Abstand zu einer Nase; und einen Abstand zu einer Wange; und die empfohlene Komponente eine Gesichtsdichtung mit einer Form umfasst, die dem Abstand zur Stirn, dem Abstand zur Nase und dem Abstand zur Wange entspricht.

3. Elektronische Vorrichtung nach einem der vorhergehenden Ansprüche, wobei: die Abstände einen Abstand zu einem Ohr umfassen; die empfohlene Komponente einen Kopfeinraster mit einer Form umfasst, die dem Abstand zum Ohr entspricht.

4. Elektronische Vorrichtung nach einem der vorhergehenden Ansprüche, ferner umfassend eine Eingabevorrichtung, die konfiguriert ist, um eine Benutzerschnittstelle zum Empfangen einer Angabe einer Messung der Kopfmerkmale oder der Anpassungsvorrichtung bereitzustellen.

5. Elektronische Vorrichtung nach einem der vorhergehenden Ansprüche, wobei die Anpassungsvorrichtung Bezugsmarkierungen umfasst, wobei der Bildsensor konfiguriert ist, um mindestens eines von einer Farbe der Bezugsmarkierungen, einer Form der Bezugsmarkierungen oder einem Abstand zwischen einem Paar der Bezugsmarkierungen zu erfassen.

6. Elektronische Vorrichtung nach einem der vorhergehenden Ansprüche, wobei der Ablenkarm eine Ablenkarm-Bezugsmarkierung (536) aufweist und der Rahmen eine Rahmen-Bezugsmarkierung (516) aufweist, wobei der Prozessor konfiguriert ist, um aus Sicht der Ablenkarm-Bezugsmarkierung und der Rahmen-Bezugsmarkierung einen Abstand zwischen der Rahmen-Bezugsmarkierung zu bestimmen, und wobei die Bestimmung der Menge an Kraft und Druck aus dem bestimmten Abstand zwischen der Ablenkarm-Bezugsmarkierung und der Rahmen-Bezugsmarkierung, der Ablenkarm-Bezugsmarkierung und der Rahmen-Bezugsmarkierung berechnet wird.

7. Verfahren (600) unter Verwendung einer Passvorrichtung (500), die einen Rahmen (510) und einen Ablenkarm (530) umfasst, der sich vom Rahmen erstreckt, wobei der Ablenkarm in eine ausgefahrene Konfiguration vorgespannt ist und konfiguriert ist, um sich in eine abgelenkte Konfiguration zu bewegen, wenn der Ablenkarm an einem Kopf anliegt und wenn der Rahmen am Gesicht des Kopfes getragen wird; wobei das Verfahren von einer elektronischen Vorrichtung (400) durchgeführt wird und Folgendes umfasst: während die Passvorrichtung nicht getragen wird, Messen (602), elektronisch mit einer Tiefenvorrichtung, von Abständen von den Merkmalen des Kopfes; mit einem Tiefensensor (412) des Sensors zu Kopf, während die Passvorrichtung getragen wird, Erfassen (604), durch den Bildsensor (412), einer Ansicht der Passvorrichtung einschließlich Bezugsmarkierungen der Passvorrichtung und des Ablenkarms; Bestimmen, durch den Rahmen, einer Menge an Kraft und Druck, die aus Sicht des Ablenkarms auf das Gesicht ausgeübt werden; basierend auf den Abständen, der Ansicht der Bezugsmarkierungen und der Menge an Kraft und Druck, Bestimmen (606) einer empfohlenen Komponente einer am Kopf montierbaren Vorrichtung, die Kräfte innerhalb eines Bereichs ausüben wird, um Sicherung und Komfort bereitzustellen; und Bereitstellen (608) einer Ausgabe, die eine Angabe der empfohlenen Komponente umfasst.

8. Verfahren nach Anspruch 7, wobei: die Abstände umfassen: einen Abstand zu einer Stirn; einen Abstand zu einer Nase; und einen Abstand zu einer Wange; und die empfohlene Komponente eine Gesichtsdichtung mit einer Form umfasst, die dem Abstand zur Stirn, dem Abstand zur Nase und dem Abstand zur Wange entspricht.

9. Verfahren nach Anspruch 7, wobei: die Abstände einen Abstand zu einem Auge umfassen; und die empfohlene Komponente eine Gesichtsdichtung mit einer Form umfasst, die dem Abstand zum Auge entspricht.

10. Verfahren nach Anspruch 7, wobei: die Abstände einen Abstand zu einem Ohr umfassen; die empfohlene Komponente einen Kopfeinraster mit einer Form umfasst, die dem Abstand zum Ohr entspricht.

11. Verfahren nach Anspruch 7, ferner umfassend das Empfangen, mit einer Eingabevorrichtung der elektronischen Vorrichtung, die eine Benutzerschnittstelle, einer Angabe einer Messung der Kopfmerkmale oder der Anpassungsvorrichtung bereitstellt.

12. Verfahren nach Anspruch 7, wobei das Verfahren ferner das Vergleichen der Sicht der Bezugsmarkierungen mit einer erwarteten Farbe der Bezugsmarkierungen, einer erwarteten Form der Bezugsmarkierungen oder einem erwarteten Abstand zwischen einem Paar der Bezugsmarkierungen umfasst.

13. Passvorrichtung (500), umfassend: einen Kopf, einen Rahmen, wobei der Rahmen (510) konfiguriert ist, um an einem Gesicht eines Benutzers getragen zu werden, der mehrere Rahmenbezugsmarkierungen (516) aufweist; und ein Band (520), das konfiguriert ist, um den Rahmen am Kopf zu sichern, wobei das Band mehrere Bandbezugsmarkierungen aufweist, die basierend auf einer Menge an Spannung, die auf das Band ausgeübt wird, relativ zueinander beweglich sind (526); und einen Ablenkarm (530), der sich vom Rahmen erstreckt, in eine ausgefahrene Konfiguration vorgespannt ist und konfiguriert ist, um sich in eine abgelenkte Konfiguration zu bewegen, wenn der Ablenkarm am Kopf anliegt und wenn der Rahmen am Gesicht getragen wird.

14. Passvorrichtung nach Anspruch 13, ferner umfassend eine Ablenkarm-Bezugsmarkierung am Ablenkarm.

15. Passvorrichtung nach Anspruch 14, wobei die Ablenkarm-Bezugsmarkierung basierend auf einer Kraft, die durch den Rahmen auf das Gesicht ausgeübt wird, relativ zu einer der Rahmenbezugsmarkierungen beweglich ist.

## Revendications

1. Un dispositif électronique (400) comprenant :
un capteur de profondeur (412) configuré pour mesurer des distances entre le capteur de profondeur (412) et des caractéristiques de tête d'une tête ;
un capteur d'image (412) configuré pour capturer une vue d'un dispositif d'ajustement (500) sur la tête, le dispositif d'ajustement comprenant un cadre (510) et un bras de déviation (530) s'étendant à partir du cadre, le bras de déviation étant sollicité vers une configuration étendue, et étant configuré pour se déplacer vers une configuration déviée lorsque le bras de déviation est en butée contre une tête et lorsque le cadre est porté sur le visage de la tête ; et
un processeur configuré pour :
recevoir des données correspondant aux distances et à la vue ;
déterminer un niveau de force et de pression appliquée par le cadre au visage, vu depuis le bras de déviation ;
sur la base des distances, de la vue et du niveau de force et de pression, déterminer un composant recommandé pour une utilisation avec un dispositif pouvant être monté sur la tête qui appliquera des forces dans une plage pour assurer fixation et confort ; et
délivrer une sortie, la sortie comprenant une indication du composant recommandé.

2. Le dispositif électronique selon la revendication 1, dans lequel :
les distances comprennent :
une distance par rapport à un front ;
une distance par rapport à un nez ; et
une distance par rapport à une joue ; et
le composant recommandé comprend une garniture de visage ayant une forme correspondant à la distance par rapport au front, à la distance par rapport au nez, et à la distance par rapport à la joue.

3. Le dispositif électronique selon l'une des revendications précédentes, dans lequel :
les distances comprennent une distance par rapport à une oreille ; et
le composant recommandé comprend un dispositif d'emboitement de tête ayant une forme correspondant à la distance par rapport à l'oreille.

4. Le dispositif électronique selon l'une des revendications précédentes, comprenant en outre un dispositif d'entrée configuré pour fournir une interface utilisateur pour recevoir une indication d'une mesure des caractéristiques de tête ou du dispositif d'ajustement.

5. Le dispositif électronique selon l'une des revendications précédentes, dans lequel le dispositif d'ajustement comprend des marqueurs de centrage, dans lequel le capteur d'image est configuré pour détecter au moins une parmi une couleur des marqueurs de centrage, une forme des marqueurs de centrage, ou une distance entre une paire des marqueurs de centrage.

6. Le dispositif électronique selon l'une des revendications précédentes, dans lequel le bras de déviation présente un marqueur de centrage de bras de déviation (536) et le cadre présente un marqueur de centrage de cadre (516), dans lequel le processeur est configuré pour déterminer, à partir de la vue du marqueur de centrage de bras de déviation et du marqueur de centrage de cadre, une distance entre le marqueur de centrage de bras de déviation et le marqueur de centrage de cadre, et dans lequel la détermination du niveau de force et de pression est calculée à partir de la distance déterminée entre le marqueur de centrage de bras de déflexion et le marqueur de centrage de cadre.

7. Un procédé (600) utilisant un dispositif d'ajustement (500) comprenant un cadre (510) et un bras de déviation (530) s'étendant à partir du cadre, le bras de déviation étant sollicité vers une configuration étendue, et étant configuré pour se déplacer vers une configuration déviée lorsque le bras de déviation est en butée contre une tête et lorsque le cadre est porté sur le visage de la tête ; le procédé étant réalisé par un dispositif électronique (400) et comprenant :
lorsque le dispositif d'ajustement n'est pas porté, la mesure (602), avec un capteur de profondeur (412) du dispositif électronique, de distances entre le capteur de profondeur et les caractéristiques de tête de la tête ;
lorsque le dispositif d'ajustement est porté, la capture (604), avec un capteur d'image (412) du dispositif électronique, d'une vue du dispositif d'ajustement comportant des marqueurs de centrage du dispositif d'ajustement et du bras de déviation ;
la détermination d'un niveau de force et de pression appliquée par le cadre au visage, vu depuis le bras de déviation ;
sur la base des distances, de la vue des marqueurs de centrage et du niveau de force et de pression, la détermination (606) d'un composant recommandé d'un dispositif pouvant être monté sur la tête qui appliquera des forces dans une plage pour assurer une fixation et un confort ; et
la délivrance (608) d'une sortie, la sortie comprenant une indication du composant recommandé.

8. Le procédé selon la revendication 7 dans lequel les distances comprennent :
une distance par rapport à un front ;
une distance par rapport à un nez ; et
une distance par rapport à une joue ; et
le composant recommandé comprend une garniture de visage ayant une forme correspondant à la distance par rapport au front, à la distance par rapport au nez, et à la distance par rapport à la joue.

9. Le procédé selon la revendication 7 dans lequel :
les distances comprennent une distance par rapport à un œil ; et
le composant recommandé comprend une garniture de visage ayant une forme correspondant à la distance par rapport à l'œil.

10. Le procédé selon la revendication 7 dans lequel :
les distances comprennent une distance par rapport à une oreille ; et
le composant recommandé comprend un dispositif d'emboitement de tête ayant une forme correspondant à la distance par rapport à l'oreille.

11. Le procédé selon la revendication 7, comprenant en outre la réception, avec un dispositif d'entrée du dispositif électronique produisant une interface utilisateur, d'une indication d'une mesure des caractéristiques de tête ou du dispositif d'ajustement.

12. Le procédé selon la revendication 7, dans lequel le procédé comprend en outre la comparaison de la vue des marqueurs de centrage à une couleur attendue des marqueurs de centrage, à une forme attendue des marqueurs de centrage, ou à une distance attendue entre une paire des marqueurs de centrage.

13. Un dispositif d'ajustement (500) comprenant :
un cadre (510) configuré pour être porté sur un visage d'une tête, le cadre ayant plusieurs marqueurs de centrage de cadre (516) ; et
une bande (520) configurée pour fixer le cadre à la tête, la bande ayant plusieurs marqueurs de centrage de bande (526) qui sont mobiles l'un par rapport à l'autre sur la base d'un niveau de tension appliquée à la bande ; et
un bras de déviation (530) s'étendant à partir du cadre, qui est sollicité vers une configuration étendue, et qui est configuré pour se déplacer vers une configuration déviée lorsque le bras de déviation est en butée contre la tête et lorsque le cadre est porté sur le visage.

14. Le dispositif d'ajustement selon la revendication 13, comprenant en outre un marqueur de centrage de bras de déviation sur le bras de déviation.

15. Le dispositif d'ajustement selon la revendication 14, dans lequel le marqueur de centrage de bras de déviation est mobile par rapport à l'un des marqueurs de centrage de cadre sur la base d'une force appliquée au visage par le cadre.
